# EUROPÄISCHE PATENTSCHRIFT

(11) **EP 3 033 779 B1**
(45) Veröffentlichungstag und Bekanntmachung des Hinweises auf die Patenterteilung: **31.05.2017**
(21) Anmeldenummer: 14755049.5
(22) Anmeldetag: 13.08.2014
(51) Int. Cl.: H01M 2/08, H01M 2/10, H01M 2/20, G11B 33/12

(54) **SPEICHERVORRICHTUNG**
STORAGE DEVICE
DISPOSITIF DE STOCKAGE

(30) Priorität: 16.08.2013 DE 102013216271
(43) Veröffentlichungstag der Anmeldung: 22.06.2016
(73) Patentinhaber: Fraunhofer Gesellschaft zur Förderung der angewandten Forschung e.V., 80686 München (DE)
(72) Erfinder: MATZ, Sebastian, 98693 Ilmenau (DE); PFÜTZENREUTER, Torsten, 98704 Langewiesen (DE); WEBER, Daniel, 98693 Ilmenau (DE)
(74) Vertreter: Zimmermann, Tankred Klaus
(86) Internationale Anmeldenummer: PCT/EP2014/067353
(87) Internationale Veröffentlichungsnummer: WO 2015/022372

(56) Entgegenhaltungen:
- EP-A1- 1 911 666
- EP-A2- 2 280 436
- JP-A- 2005 162 054

## Beschreibung

Ausführungsbeispiele der vorliegenden Erfindung beziehen sich auf eine Speichervorrichtung für ein maritimes Objekt zur Speicherung von elektrischer Energie und/oder Daten. Aus EP 1 911 666 A1 ist ein Fahrradbatteriehalter mit einem Paar an Dichtungen zur Abdichtung eines Paares an elektrischen Kontakten bekannt. Um die Dichtwirkung auszubilden wird die Dichtung mittels einer Arretierkraft verformt. Bei maritimen Objekten wird zwischen bemannten und unbemannten maritimen Objekten unterschieden. Unbemannte maritime Objekte, wie z. B. Mini-U-Boote, Sensormodule oder Bojen, werden häufig für Forschungszwecke verwendet. Hierbei erfolgt die Energieversorgung für Antrieb und Messequipment typischerweise rein elektrisch. Deshalb weisen derartige maritime Objekte im Normalfall eine aufladbare Batterie (Akku) auf. Solche fest installierten Energiespeicher verursachen alle eine lange so genannte Dockzeit, da der Ladevorgang des Akkus typischerweise mehrere Minuten bzw. sogar mehrere Stunden in Anspruch nimmt. Des Weiteren ist unter bestimmten Bedingungen, z. B. bei Temperatur nahe 0°C oder unter 0°C, eine Ladung des Akkus nicht möglich.

Infolge dessen werden immer häufiger so genannte Wechselspeichersysteme benutzt, bei denen der Akku mit verhältnismäßig geringem Aufwand getauscht werden kann.

Hierzu ist das maritime Objekt typischerweise derart konstruiert, dass der Akku von außen zugänglich ist. Aufgrund der Einsatzbedingungen von derartigen maritimen Objekten mit Feuchtigkeit (Unterwassergebrauch) und mechanischen Belastungen in alle Bewegungsrichtungen sind derartige Wechselspeicher besonders zu sichern. Bei einem bereits am Markt erhältlichen System erfolgt beim Einbau des Wechselspeichers in einem ersten Schritt die elektrische Kontaktierung. Selbst hierbei muss teilweise auf den Werkzeugeinsatz zurückgegriffen werden, da die Steckverbindungen aufgrund der hohen Dichtigkeit einen erheblichen mechanischen Widerstand aufweisen. In einem nächsten Schritt wird dann der Wechselspeicher mechanisch mit dem maritimen Objekt verbunden. Hierbei haben sich insbesondere Schraubverbindungen bewährt. Zusammenfassend heißt dies, dass der Tausch eines derartigen Wechselspeichers mit dem aktuellen Stand der Technik nicht ohne Werkzeug zu bewerkstelligen ist und erhebliche Zeit in Anspruch nimmt. Deshalb besteht der Bedarf nach einem verbesserten Ansatz.

Die Aufgabe der vorliegenden Erfindung liegt darin, eine Speichervorrichtung für ein maritimes Objekt zu schaffen, die sich durch einfache, werkzeugfreie und schnelle Handhabung auszeichnet.

Die Aufgabe wird durch eine Speichervorrichtung gemäß Anspruch 1 gelöst.

Ausführungsbeispiele der vorliegenden Erfindung schaffen eine Speichervorrichtung für ein maritimes Objekt zur Speicherung von elektrischer Energie und/oder Daten. Die Speichervorrichtung umfasst mindestens eine Speicherzelle, eine Schnittstelle zu dem maritimen Objekt mit mindestens zwei Kontakten zur elektrischen Kontaktierung der Speicherzelle und eine Dichtung für die Schnittstelle. Die Dichtung ist ausgebildet, um bei Verriegelung mittels einer Verriegelungskraft so verformt zu werden, dass die Kontakte gegenüber einer Umgebung (wie z. B. dem Wasser) abgedichtet sind und dass nach der Verriegelung die Arretierungskraft aufrechterhalten wird. Ferner umfasst die Speichervorrichtung einen Arretierungsmechanismus. Der Arretierungsmechanismus ist ausgebildet, um bei Betätigung die Verriegelungskraft auf die Dichtung auszuüben und weist entsprechend bevorzugten Ausführungsbeispielen einen Hebelmechanismus auf.

Kern der vorliegenden Erfindung liegt darin, dass mittels eines Arretierungsmechanismus bzw. Verriegelungsmechanismus eine Speichervorrichtung (z.B. zur Energiespeicherung für ein maritimes Objekt) nicht nur mechanisch mit dem maritimen Objekt verriegelt werden kann, sondern insbesondere auch dass bei der Verriegelung (mittels des Verriegelungsmechanismus) eine Kraft auf die Dichtung der elektrischen Kontakte bzw. die elektrische Schnittstelle in der Art ausgeübt wird, dass die Kontakte der Schnittstelle gegen den Widerstand der Dichtung in Eingriff gebracht werden. Hierdurch wird der elektrische Kontakt derart hergestellt, dass durch die Dichtung die Schnittstelle wasserdicht gegenüber der Umgebung abgedichtet ist. Mit anderen Worten ausgedrückt heißt das, dass der Verriegelungsmechanismus als Kraftwandler fungiert, mittels welchem die Verriegelungskraft (v.a. zum Schließen der Dichtung) aufgebracht wird. Zusammengefasst bietet die beschriebene Vorrichtung die Vorteile, dass unter Zuhilfenahme des Hebelmechanismus die Speichervorrichtung sehr einfach in das maritime Objekt eingesetzt und verriegelt werden kann, wobei bei dem Verriegeln gleichzeitig der elektrische Kontakt hergestellt wird. Die Abdichtung der Schnittstelle erfolgt beispielsweise unter Verformung der Dichtung, wobei gleichzeitig durch diese Verformung, aus der ein enger Sitz resultiert, eine Arretierungskraft aufrechterhalten wird.

Um die Verbindung zwischen dem maritimen Objekt und der Speichervorrichtung bzw. insbesondere die Verbindung der Schnittstelle zu lösen, kann entsprechend weiterer Ausführungsbeispiele der Arretierungsmechanismus ausgebildet sein, um bei Betätigung mit einer Entriegelungskraft auf die Dichtung einzuwirken. Das heißt also, dass durch den Arretierungsmechanismus nicht nur die eigentliche mechanische Arretierung der Speichervorrichtung gegenüber dem maritimen Objekt realisiert wird, sondern insbesondere auch das Schließen und Öffnen der abgedichteten elektrischen Verbindung.

In entsprechenden Ausführungsbeispielen umfasst die Speicherzelle einen Datenspeicher und/oder einen Energiespeicher, wie z. B. eine Batterie, einen Akku und/oder einen Kondensator. In entsprechenden Ausführungsbeispielen umfasst ferner die Schnittstelle mindestens zwei Kontakte zur Stromversorgung und bevorzugterweise weitere Kontakte zum Datenaustausch, z. B. für den Datenspeicher.

Entsprechend einem weiteren Ausführungsbeispiel umfasst der Hebelmechanismus einen ersten Eingriffnahmeabschnitt, wie z. B. eine Nase, die ausgebildet ist mit einem weiteren Eingriffnahmeabschnitt, wie z. B. einer Führungsschiene des maritimen Objekts in Eingriff zu gehen. Beispielsweise kann die Führungsschiene vorzugsweise in Querrichtung verlaufen bzw. eine T- oder L-Form aufweisen, sodass der erste Eingriffnahmeabschnitt, welcher auf einer Kreisbahn um einen Drehpunkt des Hebelarms bewegbar ist, bei einem Einwirken eines Drehmoments auf den Hebelarm in die Führungsschiene derart geführt wird, dass der Drehpunkt ungefähr senkrecht zu der Führungsschiene, d. h. also in einer Längsrichtung, bewegt wird. Da der Drehpunkt mit der Speichervorrichtung mechanische gekoppelt ist, erfolgt auch gleichzeitig eine Bewegung der Speichervorrichtung in der Verriegelungskraftrichtung. Die Relativbewegung zwischen Speichervorrichtung und dem maritimen Objekt wird in zunehmendem Maße mit der Verriegelungskraft überlagert, wobei vorteilhafterweise der Hebelarm bei zunehmender Relativbewegung vergrößert wird. Die rührt daher, dass der Eingriffnahmeabschnitt des Hebelarms entlang der Führungsschiene ausgelenkt wird.

Entsprechend weiteren Ausführungsbeispielen umfasst der Hebelarmmechanismus einen Griff, der optional abnehmbar ist. Zusätzlich kann mittels dieses Griffes die Speichervorrichtung, wenn dieselbe nicht in dem maritimen Objekt arretiert ist, transportiert werden. Ein hieraus resultierende weiterer Vorteil besteht somit darin, dass die Speichervorrichtung unter Zuhilfenahme des Griffs von außen ohne weiteres technisches Gerät, wie z. B. einen Kran, eingesetzt und entnommen werden kann, was also ein sehr schnelles Wechseln derselben ermöglicht.

Ausführungsbeispiele der vorliegenden Erfindung werden anhand der beiliegenden Zeichnungen im Detail erläutert. Es zeigen:
- Fig. 1: eine schematische Darstellung einer Speichervorrichtung gemäß einem ersten Ausführungsbeispiel;
- Fig. 2: eine schematische Darstellung einer weiteren Speicherzelle gemäß einem weiteren Ausführungsbeispiel;
- Fig. 3a - d: schematische Darstellungen des Vorgangs des Einsetzens der Speicherzelle;
- Fig. 4a - d: schematische Darstellungen des Vorgangs des Entnehmens der Speicherzelle; und
- Fig. 5a - d: verschiedene relative Positionen einer Speicherzelle gegenüber dem maritimen Objekt.

Bevor Aspekte der vorliegenden Erfindung anhand der Figuren im Detail erläutert werden, wird darauf hingewiesen, dass gleichwirkende Elemente und Strukturen mit gleichen Funktionszeichen versehen sind, sodass die Beschreibung derer austauschbar ist bzw. aufeinander angewendet werden kann.

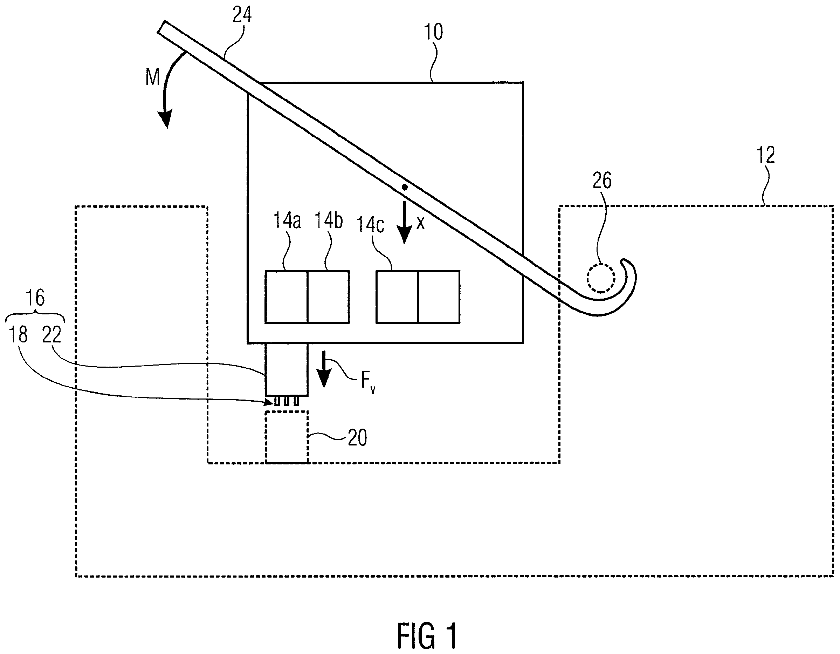

Fig. 1 zeigt eine Speichervorrichtung 10 für ein maritimes Objekt 12, wie z. B. ein U-Boot oder eine Boje. Die Speichervorrichtung 10 umfasst mindestens eine Speicherzelle 14a, z. B. zur Speicherung von elektrischer Energie. Des Weiteren umfasst die Speichervorrichtung 10 eine Schnittstelle 16, die mindestens zwei Kontakte 18, z.B. steckbare Kontakte 18 einer Steckverbindung, umfasst. Das maritime Objekt 12 weist eine eigene Schnittstelle 20 als Gegenstück zur Schnittstelle 16 auf. Die Schnittstelle 16 umfasst ferner eine Dichtung 22, die ausgebildet ist, um zusammen mit dem Gegenstück 20 die Schnittstelle 16 bzw., um genau zu sein, die Kontakte 18 abzudichten. Die Abdichtung erfolgt bevorzugt so, dass eine wasserdichte Verbindung hergestellt wird, um für das maritime Objekt 12 eine Tiefseetauglichkeit sicherzustellen. Insofern wird also durch die Schnittstelle 16 mit den Kontakten 18, der Dichtung 22 und dem Gegenstück 20 ein Unterwasser-Steckverbinder realisiert.

Die Grundfunktionalität der Speichervorrichtung 10 lässt sich also dadurch beschreiben, dass diese ausgebildet ist, z.B. elektrische Energie und für das maritime Objekt 12 bereitzustellen und/oder um (Mess-)Daten zu speichern, wobei die Übertragung der elektrischen Energie mittels der Schnittstelle 16 bzw. unter Zuhilfenahme der Kontakte 18 erfolgt. Da bei dem maritimen Objekt 12 die Umgebung typischerweise ein flüssiges Medium, wie z. B. Wasser oder Seewasser, ist, welches zu Kurzschlüssen führen kann, wird die Schnittstelle 16 mit der Dichtung 22 abgedichtet. Die Dichtung 22 umfasst einen Kunststoff, ein Gummi oder ein anderes nicht leitendes, bevorzugterweise elastisch verformbares Material. Die Dichtung muss insbesondere im Fall von Unterwasser-Einsätzen (mit Tiefen > 10m), sehr eng, d.h. mit ausreichender Flächenpressung, anliegen, um die Dichtwirkung zu gewährleisten. Diese Dichtwirkung wird typischerweise nur unter kraftintensiver Verformung der Dichtung 22 erreicht. Das Schließen der Schnittstelle 16 (bzw. das Verformen der Dichtung 22) erfolgt deshalb mit einer von außen aufzubringenden Verriegelungskraft Fᵥ, die typischerweise größer als die alleinige Gewichtskraft der Speichervorrichtung 10 ist. Nach Verriegelung wird durch die verformte Dichtung 22 eine zur Aufrechterhaltung der Dichtwirkung dienenden Arretierungskraft, z. B. durch (Haft-) Reibung bzw. einen Reibschluss, aufrechterhalten.

Zusätzlich weist die Speichervorrichtung 10 einen Arretierungsmechanismus 24 auf, der von außen bedienbar ist und mittels welchem die Speichervorrichtung 10 gegenüber dem maritimen Objekt 12 verriegelt werden kann. Hierzu kann der Arretierungsmechanismus 24 in einen Eingriffnahmeabschnitt 26 des maritimen Objekts 12 eingreifen. Gleichzeitig ist der Arretierungsmechanismus 24 ausgebildet, um bei entsprechender Betätigung die Verriegelungskraft Fᵥ zwischen dem Objekt 12 und der Speichervorrichtung 10 aufzubringen. Es wird also, beispielsweise durch Aufbringen eines Drehmoments M, eine Bewegung der Speichervorrichtung 10 in Richtung x und/oder das Aufbringen der Verriegelungskraft Fᵥ entlang der x-Richtung bewirkt. Hierbei kann der Verriegelungsmechanismus 24 vorteilhafterweise als Kraftwandler, wie z. B. als Hebelmechanismus, ausgeführt sein. Es sei an dieser Stelle angemerkt, dass die einzubringende Kraft bzw. die Bedienkräfte nicht zwingendermaßen in Form eines Drehmoments M vorliegen müssen, sondern auch anders geartet sein können.

Der Arretierungsmechanismus 24 ermöglicht des Weiteren, dass dieser nach Arretierung derart mit dem maritimen Objekt 12 bzw. mit dem Eingriffnahmeabschnitt 26 des maritimen Objekts 12 in Eingriff ist, sodass eine mechanisch feste Verbindung zwischen der Speichervorrichtung 10 und dem maritimen Objekt 12 sichergestellt ist. Denkbar hierbei wäre sowohl ein Reibschluss (z.B. bewirkt durch die Dichtung 22) als auch ein Formschluss (z.B. zwischen dem Arretierungsmechanismus 24 und dem Eingriffnahmeabschnitt 26).

Entsprechend weiteren Ausführungsbeispielen kann die Speichervorrichtung 10 eine weitere Speicherzelle 14b ebenfalls zur Speicherung von elektrischer Energie aufweisen. Die Speicherzellen 14a und 14b können beispielsweise eine Batterie, ein Akku oder einen Kondensator umfassen. Entsprechend weiteren Ausführungsbeispielen ist es auch möglich, dass die Speichervorrichtung 10 zusätzliche anders geartete Speicherzellen 14c zu Speicherung von Daten aufweist. Hierbei umfasst dann typischerweise die Schnittstelle 16 mehr als die zwei oben genannten Kontakte 18.

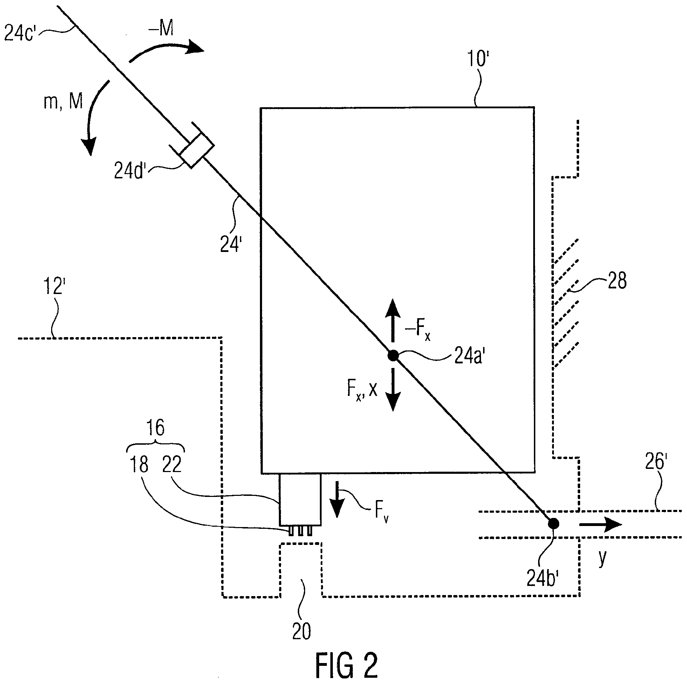

Bezug nehmend auf Fig. 2 wird ein erweitertes Ausführungsbeispiel erläutert. Fig. 2 zeigt eine weitere Speichervorrichtung 10' für ein maritimes Objekt 12' mit einer Schnittstelle 16, welche die Kontakte 18 und die Dichtung 22 umfasst. Ferner weist die Speichervorrichtung 10' auch die Speicherzellen zur Speicherung von Energie und/oder Daten auf, wobei diese nicht dargestellt sind. Zur Arretierung bzw. zum Verriegeln der Speichervorrichtung 10' mit dem maritimen Objekt 12' umfasst die Speichervorrichtung 10' einen erweiterten Arretierungsmechanismus 24', der unten im Detail beschrieben wird. Zusätzlich ist die Speichervorrichtung 10' gegenüber dem maritimen Objekt 12' mittels einer Führung 28 gelagert.

Die Führung 28 kann beispielsweise bezogen auf die Speichervorrichtung 10' seitlich angeordnet sein und eine oder mehrere Führungsschienen mit entsprechenden Führungszapfen (nicht dargestellt), z.B. in Schwalbenschwanzform, umfassen. Durch diese Führung 28 können sowohl seitliche Kräfte als auch Drehmomente, die zwischen der Speichervorrichtung 10' und dem maritimen Objekt 12' herrschen, aufgenommen werden.

Der Arretierungsmechanismus 24' umfasst einen Hebelarm, der in dem Punkt 24a' drehbar gegenüber der Speichervorrichtung 10' gelagert ist. Des Weiteren umfasst der Arretierungsmechanismus 24' einen Eingriffnahmeabschnitt 24b', der in den Eingriffnahmeabschnitt 26' des maritimen Objekts 12' eingreifen kann. Der Eingriffnahmeabschnitt 26' des maritimen Objekts 12' kann beispielsweise als quer verlaufende Führungsschiene ausgebildet sein, in die der Eingriffnahmeabschnitt 24b', der beispielsweise als Rolle ausgebildet ist, eingreift. Quer heißt hier senkrecht oder annähernd senkrecht gegenüber der Richtung x, entlang welcher die Speichervorrichtung 10' eingesetzt wird. Die Führungsschiene 26' ist also ausgebildet, um die Bewegung des Eingriffnahmeabschnitts 24b' in Längsrichtung x einzuschränken, eine Drehbewegung m um den Eingriffnahmeabschnitt 24b' und eine Querbewegung in y-Richtung aber zuzulassen. Durch eine Drehung (vergleiche Rotationspfeil m) des Hebelarms 24' um den Eingriffnahmeabschnitt 24b' bzw. den Drehpunkt 24b' erfolgt eine Bewegung der Speichervorrichtung 10' entlang der Richtung x bzw. das Aufbringen einer Längskraft entlang der Richtung x. Somit stellt der Hebelarm 24' einen Kraftwandler dar, der ausgebildet ist, ein Drehmoment m in eine Längskraft Fₓ zu wandeln. Bei diesem Vorgang verschiebt sich der Eingriffnahmeabschnitt 24b' entlang der y-Richtung. Also kann unter Zuhilfenahme des Arretierungsmechanismus 24' die Speichervorrichtung 10' in das maritime Objekt 12' eingesetzt werden und gleichzeitig die Verriegelungskraft Fᵥ beim Vorgang des Arretierens bzw. des Verriegelns aufgebracht werden. Die Verriegelungskraft Fᵥ resultiert vollständig oder teilweise aus der Längskraft Fₓ, wobei die Verriegelungskraft Fᵥ auch eine aus der Gewichtskraft der Speichervorrichtung 10' resultierende Kraftkomponente aufweisen kann. Durch die Bewegung des Drehpunkt 24b' entlang der y-Achse wird der wirkende Hebelarm verlängert, so dass bei gleichbleibender Bedienkraft ein zunehmendes Drehmoment M und somit eine zunehmende Längskraft Fₓ erzielt werden kann.

Entsprechend weiteren Ausführungsbeispielen kann die beschriebene Bewegung auch umgekehrt werden, sodass der Arretierungsmechanismus 24' auch zum Entriegeln genutzt wird. Hierbei wird dann durch Aufbringen eines entgegengesetzten Drehmoments -M eine Entriegelungskraft -Fₓ bei gleichzeitiger Bewegung der Speichervorrichtung 10' in entgegengesetzte x-Richtung erzeugt.

Entsprechend weiteren Ausführungsbeispielen kann der Arretierungsmechanismus 24' derart ausgeführt sein, dass das obere Ende des Arretierungsmechanismus 24c' von dem restlichen Arretierungsmechanismus 24' abgenommen werden kann. Das obere Teil 24c' kann beispielsweise eine Griffform aufweisen. Der Verbindungsflansch 24d' zwischen diesen zwei Teilen des Arretierungsmechanismus 24' kann beispielsweise als Gewinde oder als Steckflansch realisiert sein.

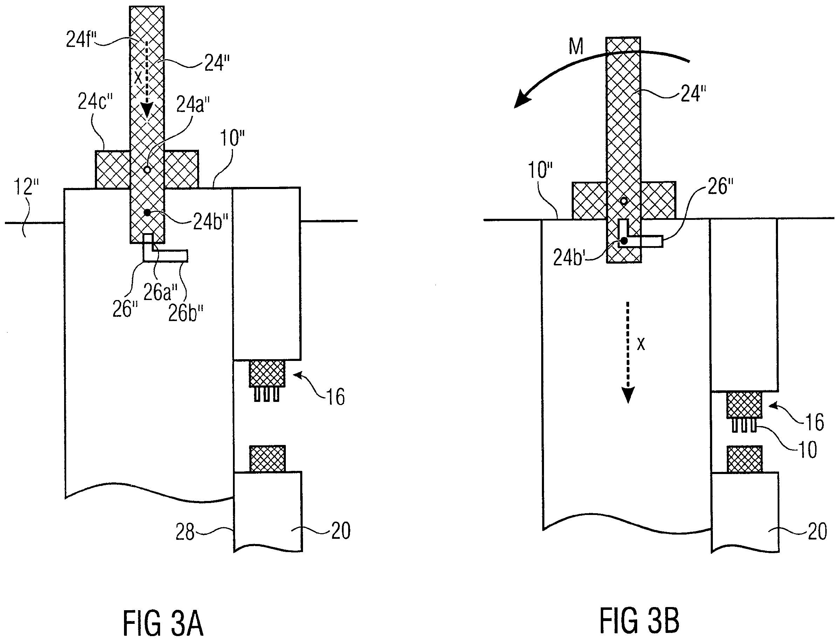

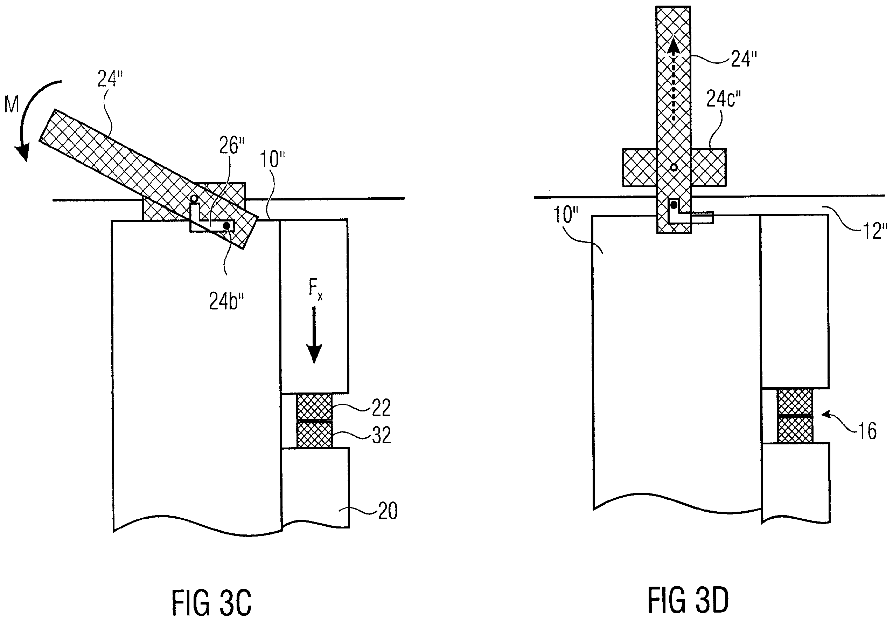

Bezug nehmend auf Fig. 3 wird nun der Vorgang des Verriegelns beschrieben. Fig. 3a zeigt eine Speichervorrichtung 10", welche gerade in das maritime Objekt 12" eingesetzt wird. Das maritime Objekt 12" weist die Schnittstelle 20 (Gegenstück zu der Schnittstelle 16) auf, wobei das Gegenstück 20 mit einer seitlichen Kante die Führung 28 bildet. In diesem Ausführungsbeispiel ist der Arretierungsmechanismus 24" nicht Teil der Speichervorrichtung 10', sondern ein zusätzliches abnehmbares Objekt. Der Arretierungsmechanismus 24" ist durch einen Eingriffnahmeabschnitt 24e", der beispielsweise die Form eines Profils hat und auf die Speichervorrichtung 10" aufsetzbar ist bzw. allgemein mit dieser in Eingriff zu bringen ist, und den Hebelarm 24f" gebildet. Der Hebelarm 24f" und der Eingriffnahmeabschnitt 24e" sind drehbar zueinander durch den Drehpunkt 24a" gelagert. Der Hebelarm 24f" weist auf einer ersten Seite, die der Seite des Bedienhebels gegenüberliegt, den Eingriffnahmeabschnitt 24b" zur Eingriffnahme mit dem maritimen Objekt 12" auf. Das maritime Objekt 12" weist in diesem Ausführungsbeispiel eine L-förmige Führungsschiene 26" auf. Die L-Form ergibt sich dadurch, dass in einem ersten Bereich 26a" die Führungsschiene 26" entlang der x-Richtung (also parallel zu der Lagerung 28) verläuft, während der zweite Bereich 26b" der Führungsschiene 26" quer verläuft.

In dem ersten Bereich 26a" erfolgt das Einsetzen der Speichervorrichtung 10" in die Aufnahme des maritimen Objekts 12" alleine durch die Gewichtskraft bzw. ohne eine zusätzlich aufgebrachte Kraft. Dieser Vorgang ist in Fig. 3a illustriert. Ab dem Punkt, an welchem sich der Eingriffnahmeabschnitt 24b' bzw. der Eingriffnahmezapfen 24b' an dem 90°-Winkel der Führungsschiene 26" befindet, kann durch das Drehmoment M, welches über den Hebelarm 24" wirkt, eine Bewegung des Eingriffnahmeabschnitts 24b' entlang des zweiten Bereichs 26b" der Führungsschiene 26" also in Querrichtung y erfolgen, um die Speichervorrichtung 10" weiter in x-Richtung zu bewegen. Dies ist in Fig. 3b illustriert. Es sei ferner darauf hingewiesen, dass an diesem Punkt der Bewegungsbahn die Kontakte 18 der Schnittstelle 16 noch nicht in Kontakt zu dem Gegenstück 20 sind.

Durch weiteres Einwirken des Drehmoments M auf den Hebelarm 24" erfolgt eine Verschiebung des Eingriffnahmeabschnitts 24b' in Querrichtung entlang der Führungsschiene 26", sodass durch das Drehmoment M die Verriegelungskraft Fᵥ infolge der Längskraft Fₓ auf die Dichtung 22 einwirkt. Dieser Vorgang ist in Fig. 3c illustriert. An dieser Stelle sei angemerkt, dass die Dichtung 22 zusammen mit einem weiteren Dichtungselement 32 des Gegenstücks 20 in Kontakt geht, sodass die Dichtwirkung und/oder die Arretierungskraft an der Schnittstelle 16 ausgebildet wird. Das Gegenstück 32 kann beispielsweise ebenfalls eine Dichtung, bestehend aus einem flexiblen Material, wie z. B. Gummi, sein oder auch eine einfache, beispielsweise planarisierte, Kontaktfläche umfassen. Nach Verriegeln wird die Arretierungskraft entweder durch den Arretierungsmechanismus 24" oder durch die Schnittstelle 16 aufrecht erhalten. Dies ist möglich, da typischerweise das zur Dichtung verwendete Material 22 derart verformt wird, sodass ein Reibschluss hergestellt ist.

So kann dann in einem nächsten Schritt der Arretierungsmechanismus 24" wieder entnommen werden, wie anhand von Fig. 3d illustriert ist. Hierzu wird dann der Eingriff zwischen dem Eingriffnahmeabschnitt 24e" und der Speichervorrichtung 10" gelöst. Da nach Entfernen der Arretierungsvorrichtung 24" die Speichervorrichtung 10" weiterhin gegenüber dem maritimen Objekt 12" durch die Arretierungskraft, z.B. bevorzugt in x-Richtung, befestigt ist.

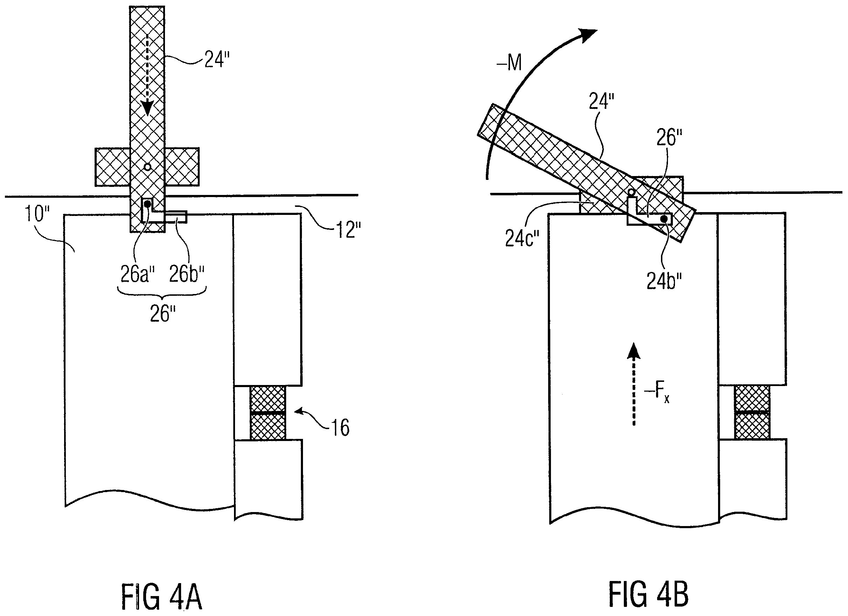

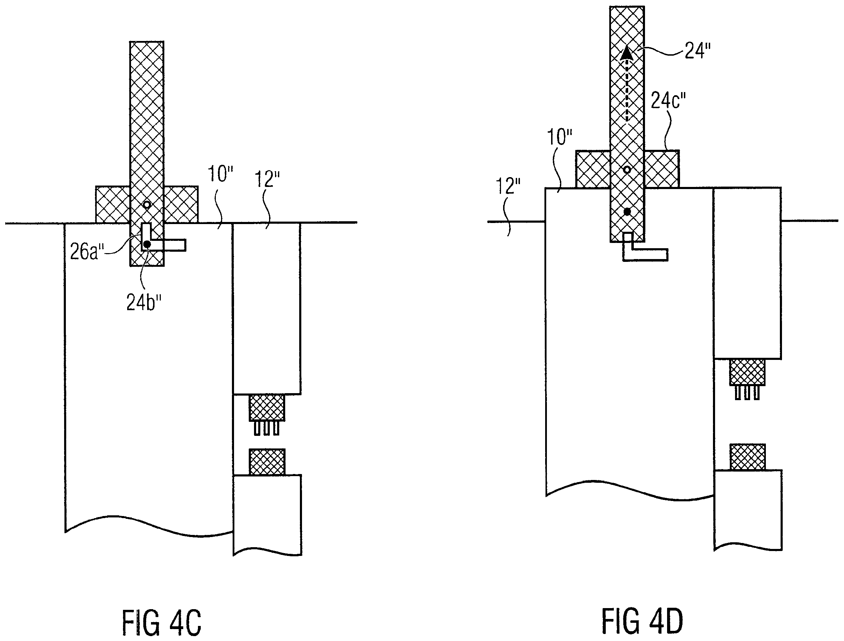

Entsprechend weiteren Ausführungsbeispielen kann der Arretierungsmechanismus 24" zum Entriegeln, also zum Lösen der Arretierungskraft benutzt werden, wie anhand von Fig. 4 dargestellt ist. Fig. 4a zeigt die Speichervorrichtung 10", welche gegenüber dem maritimen Objekt 12" arretiert ist. Hier ist also die Schnittstelle 16 geschlossen. Ferner wird der Arretierungsmechanismus 24" eingelegt, um die Arretierung zwischen Speichervorrichtung 10" und dem maritimen Objekt 12" zu lösen. Hierzu wird, wie in Fig. 4b dargestellt, der Arretierungsmechanismus 24" mit dem Eingriffnahmeabschnitt 24b" vollständig in die Führungsschiene 26" eingeführt und ein Eingriff zwischen dem Eingriffnahmeabschnitt 24e" und der Speichervorrichtung 10" hergestellt, sodass mittels des Arretierungsmechanismus 24" eine Längskraft -Fₓ (also entgegen der x-Richtung, vergleiche Fig. 3b) aufgebracht werden kann, aus der die Entriegelungskraft -Fᵥ herrührt. Die Längskraft -Fₓ wird durch ein Drehmoment -M (im Vergleich zu dem Drehmoment M mit entgegengesetzter Richtung) erzeugt, wie anhand von Fig. 4b dargestellt ist.

Nachdem mittels der Entriegelungskraft -Fₓ die Arretierungskraft überwunden ist, befindet sich die Speichervorrichtung 10" zwar noch mit dem maritimen Objekt 12" in Eingriff (vgl. Eingriffnahmeabschnitte 26a" und 24b"), wie anhand von Fig. 4c dargestellt ist, kann aber in einem nächsten Schritt entnommen werden. Dieser nächste Schritt ist anhand von Fig. 4d dargestellt. Da der Eingriffnahmeabschnitt 24e" und die Speichervorrichtung 10" sich noch in Eingriff befinden, kann unter Zuhilfenahme des Arretierungsmechanismus 24" die Speichervorrichtung 10" dem maritimen Objekt 12" entnommen werden. Hierzu ist es vorteilhaft, dass, wie oben beschrieben, die Arretierungsvorrichtung 24" einen Griff umfasst.

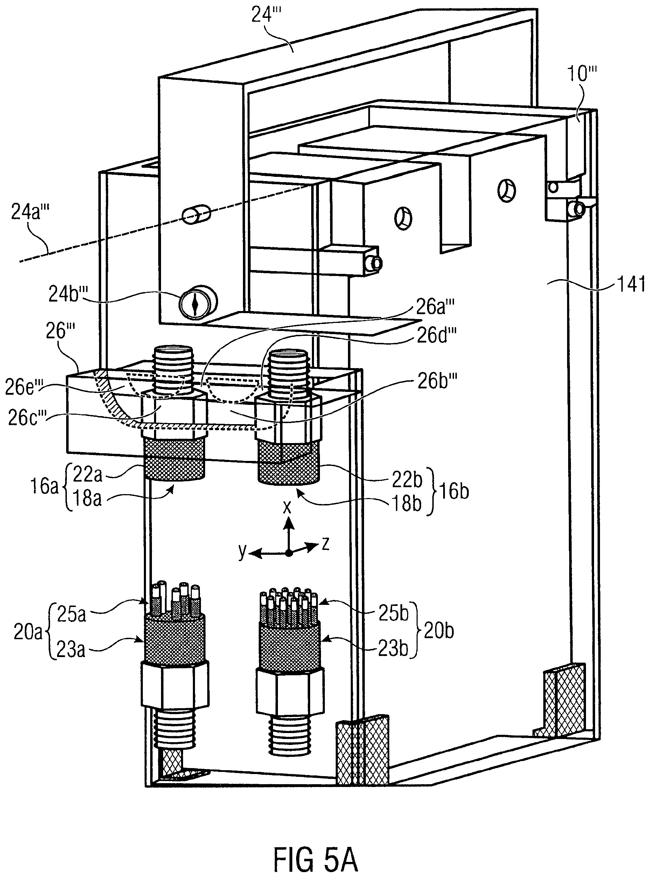

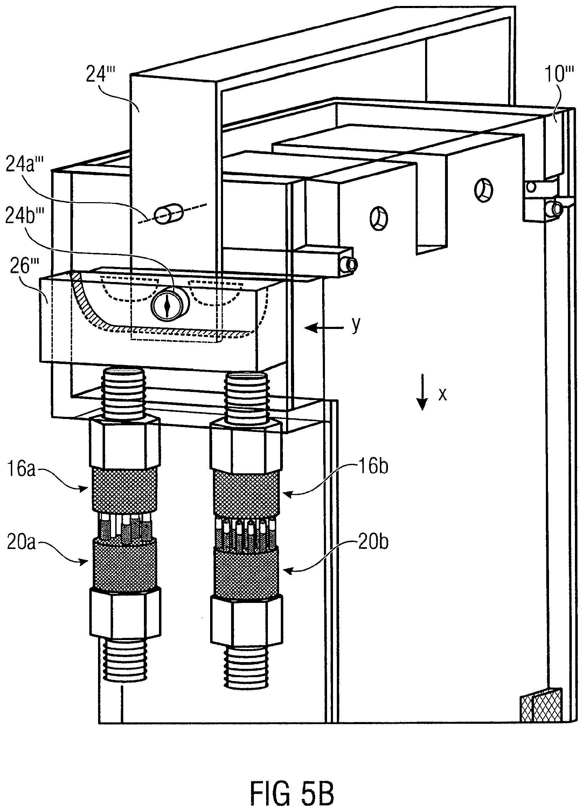

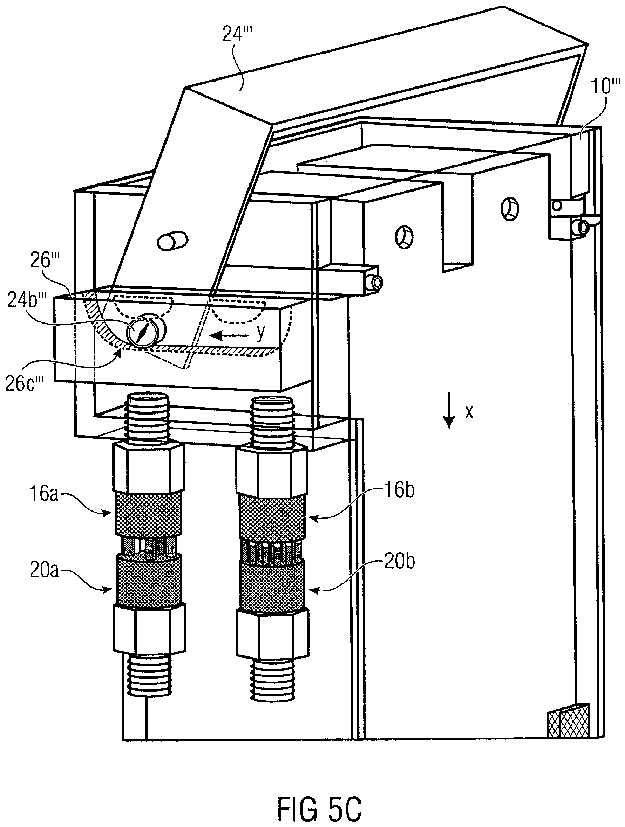

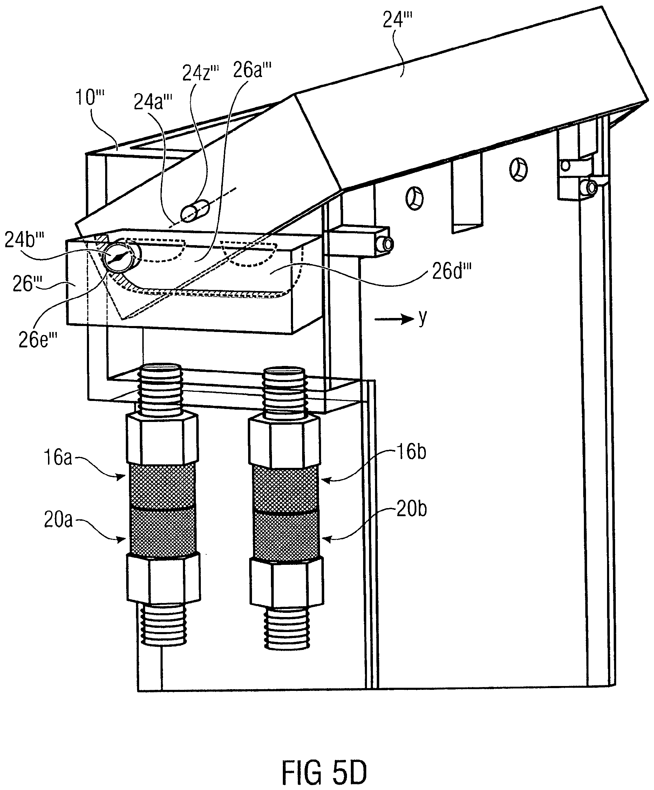

Bezug nehmend auf Fig. 5 wird nun ein konkretes Konstruktionsbeispiel der Speichervorrichtung 10"' für das maritime Objekt 12"' beschrieben.

Fig. 5a zeigt die kubischen Speichervorrichtung 10"' mit mindestens einer Speicherzelle 14a und dem Arretierungsmechanismus 24"'. Der Arretierungsmechanismus 24'" ist hier als fest mit der Speichervorrichtung 10'" verbundener Bügel, der als Griff genutzt werden kann, ausgeführt, wobei der Bügel um die Drehachse 24a'" drehbar gelagert ist. Auf der dem Griff des Bügels 24'" abgewandten Seite weist derselbe den Eingriffnahmeabschnitt 24b'" auf.

Bei diesem Ausführungsbeispiel umfasst die Speichervorrichtung 10"' zwei Schnittstellen 16a und 16b zur elektrischen Kontaktierung. Jede dieser Schnittstelle 16a und 16b umfasst eine Dichtung 22a und 22b sowie Kontakte 18a und 18b, die hier als Buchsen für die Steckverbindungen ausgelegt sind. Die Schnittstellen 16a und 16b sind seitlich an dem kubusförmigen Speicherelement 10'" angeordnet. Gegenüber diesen Schnittstellen 16a und 16b sind die Schnittstellen 20a und 20b des maritimen Objekts 12'" angeordnet. Hier weist jede dieser Schnittstellen ebenso eine Dichtung 23a und 23b sowie die Kontaktstecker 25a und 25b auf. Wie der Fig. 5a ferner zu entnehmen ist, sind bei diesem Ausführungsbeispiel die Schnittstellen 16a und 16b in die Speichervorrichtung 10'" eingeschraubt. Analog hierzu sind die Schnittstellen 20a und 20b des maritimen Objekts 12'" eingeschraubt.

Das maritime Objekt 12"' weist hier eine vertikale Führungsnut 26"' als Eingriffnahmeabschnitt auf. Die Führungsnut 26'" ist als T-förmig zu beschreiben. Im Folge dessen weist die Führungsnut 26'" einen ersten in x-Richtung verlaufenden Abschnitt 26a'" sowie einen zweiten und dritten in y-Richtung verlaufenden Abschnitt 26b'" und 26c"' auf. Die beiden Abschnitte 26b"' und 26c'" sind seitlich (auf einer ersten Seite, z.B. links und auf einer zweiten gegenüberliegenden Seite (z.B. rechts) bezogen auf den Abschnitt 26a'" angeordnet, sodass die Führungsnut 26"' eine symmetrische Form ausbildet. Optional können auch dritte und vierte Abschnitte 26d"' und 26e"' ausgebildet sein, die derart gebogen sind, dass sie entgegen der x-Richtung auslaufen.

Fig. 5a zeigt die Speichervorrichtung 10'" in einer relativen Position zu dem maritimen Objekt 12"' bevor die Speichervorrichtung 10"' mittels des Eingriffnahmeabschnitts 24b"' durch den Bereich 26a'" der Führungsnut 26"' geführt wird. Hierbei ist der Arretierungsmechanismus 24"' längs der x-Richtung angeordnet. Mit anderen Worten heißt das, dass ein Vektor von der Drehachse 24a"' durch den Eingriffnahmeabschnitt 24b"' parallel zu der x-Achse verläuft. In dieser x-Richtung kann nun die Speichervorrichtung 10'" (alleine durch die Gewichtskraft, welche in x-Richtung herrscht) so weit abgesenkt werden, bis der Eingriffnahmeabschnitt 24b'" im Bereich 26a"' der Führungsnut 26"' durchschritten hat und auf der quer verlaufenden Führungsnut 26"' aufliegt. Diese Situation ist in Fig. 5b dargestellt. Wie ferner zu erkennen ist, ist hier der Arretierungshebel 24'" weiterhin parallel zur x-Achse angeordnet. Ferner ist zu erkennen, dass die Schnittstelle 16a mit der Schnittstelle 20a und die Schnittstelle 16b mit der Schnittstelle 20b teilweise miteinander verbunden sind.

Bei Umlegen des Arretierungsmechanismus 24'" durch Aufbringen eines Drehmoments z.B. im Uhrzeigersinn wird die Speichervorrichtung 10'" weiter abgesenkt und die Schnittstellen 16a/20a bzw. die Schnittstellen 16b/20b geschlossen. Dies ist in Fig. 5c illustriert. Wie anhand von Fig. 5c weiter zu erkennen ist, wird durch die Drehung der Arretierungsvorrichtung 24'" im Uhrzeigersinn der Eingriffnahmeabschnitt 24b"' in y-Richtung in die Führungsnut 26'" bzw., um genau zu sein, in den Bereich 26c"' hinein bewegt.

Wie in Fig. 5d dargestellt ist, kann die Geometrie der Führungsnut 26"' derart sein, dass diese eine Arretierungsposition ausbildet. Diese Arretierungsposition wird dann ausgebildet, wenn sich der Eingriffnahmeabschnitt 24b'" in dem Bereich 26e"' oder in dem Bereich 26d"' befindet. In dieser Position sind dann auch die Schnittstellen 16a/20a und 16b/20b vollständig (und somit wasserdicht) miteinander verbunden. Der Bereich 26e'" ist gebogen und weist bevorzugterweise einem Radius auf, der der Bewegungsbahn des Eingriffnahmeabschnitts 24b'" um die Drehachse 24a"' entspricht. Hierdurch kann erreicht werden, dass keine weitere Kraft in x-Richtung ausgeübt wird (bis der Bügel 24'" vollständig abgesenkt ist. Ferner wird diese Arretierungsposition auch durch den optionalen Zapfen 24z"', der eine Verlängerung der Rotationsachse 24a"' darstellt, bestimmt. Der oder die Zapfen 24z"' sind ausgebildet, um mit dem Bereich 26a'" der Führungsnut 26 in Eingriff zu gehen. In dieser Position ist dann der Hebel 24'" parallel zu der y-Achse angeordnet. Diese Anordnung des Hebelarms 24"' in der Verriegelungsposition ist sehr platzeffizient.

Auch wenn bei obiger Diskussion des Ausführungsbeispiels aus Fig. 5a bis 5d davon ausgegangen wurde, dass der Arretierungshebel 24'" zum Verriegeln im Uhrzeigersinn bewegt wird, ist es für einen Fachmann klar, dass aufgrund der Symmetrie die Führungsschiene 26'" auch eine Verriegelung der Speichervorrichtung 10'" bei einer entgegengesetzten Bewegung, also einer Bewegung gegen den Uhrzeigersinn, möglich ist.

Auch wenn bei obigen Ausführungsbeispielen die Speichervorrichtung immer einen Energiespeicher und eventuell einen zusätzlichen Datenspeicher als Speicherzelle umfasste, sei darauf hingewiesen, dass die Speichervorrichtung entsprechend weiteren Ausführungsbeispielen auch nur einen Datenspeicher aufweisen kann.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Speichervorrichtung (10, 10', 10", 10"') für ein maritimes Objekt (12, 12', 12", 12"') zur Speicherung von elektrischer Energie und/oder Daten, mit folgenden Merkmalen:
mindestens einer Speicherzelle (14a, 14b, 14c, 14d);
einer Schnittstelle (16, 16a, 16b) zu dem maritimen Objekt (12, 12', 12", 12"') mit mindestens zwei Kontakten (18, 18a, 18b) zur elektrischen Kontaktierung der Speicherzelle (14a, 14b, 14c, 14d);
einer Dichtung (22, 22a, 22b) für die Schnittstelle (16, 16a, 16b), die ausgebildet ist, um bei Verriegelung mittels einer Verriegelungskraft (Fᵥ) so verformt zu werden, dass die Kontakte (18, 18a, 18b) gegenüber einer Umgebung abgedichtet sind und dass nach der Verriegelung eine Arretierungskraft aufrechterhalten wird; und
einem Arretierungsmechanismus (24, 24', 24", 24"'), der ausgebildet ist, um bei Betätigung die Verriegelungskraft (Fᵥ) auf die Dichtung (22, 22a, 22b) auszuüben,
wobei der Arretierungsmechanismus (24, 24', 24", 24"') einen Hebelmechanismus (24, 24', 24", 24"') mit einem ersten Eingriffnahmeabschnitt (24b', 24b", 24b"') umfasst, der mit einem zweiten Eingriffnahmeabschnitt (26, 26', 26", 26"') des maritimen Objekts (12, 12', 12", 12"') in Eingriff bringbar ist.

2. Speichervorrichtung (10, 10', 10", 10"') gemäß Anspruch 1, wobei der Arretierungsmechanismus (24, 24', 24", 24"') ausgebildet ist, um bei Betätigung mit einer Entriegelungskraft (-Fᵥ) auf die Dichtung (22, 22a, 22b) einzuwirken.

3. Speichervorrichtung (10, 10', 10", 10"') gemäß Anspruch 2, wobei die Entriegelungskraft (-Fᵥ) der Verriegelungskraft (Fᵥ) entgegengerichtet ist und der Arretierungskraft entgegenwirkt.

4. Speichervorrichtung (10, 10', 10", 10"') gemäß einem der Ansprüche 1 bis 3, wobei der Arretierungsmechanismus (24, 24', 24", 24"') ausgebildet ist, um nach Verriegelung eine formschlüssige und/oder reibschlüssige Verbindung zu dem maritimen Objekt (12, 12', 12", 12"') herzustellen.

5. Speichervorrichtung (10, 10', 10", 10"') gemäß einem der Ansprüche 1 bis 4, wobei die Speicherzelle (14a, 14b, 14c, 14d) einen Datenspeicher und/oder eine Batterie, einen Akku und/oder einen Kondensator umfasst.

6. Speichervorrichtung (10, 10', 10", 10"') gemäß einem der Ansprüche 1 bis 5, wobei die Schnittstelle (16, 16a, 16b) weitere Kontakte aufweist, wobei die mindestens zwei Kontakte (18, 18a, 18b) zur Stromversorgung dienen und wobei die weiteren Kontakte zum Datenaustausch dienen.

7. Speichervorrichtung (10, 10', 10", 10"') gemäß einem der Ansprüche 3 bis 6, die ein oder mehrere Führungselemente (28) aufweist, welche eine Führung entlang Verriegelungskraft (Fᵥ) und der Arretierungskraft ermöglichen und einen Freiheitsgrad in andere Richtungen einschränken.

8. Speichervorrichtung (10, 10', 10", 10"') gemäß einem der Ansprüche 1 bis 7, wobei der Hebelmechanismus (24, 24', 24", 24"') ausgebildet ist, um bei Betätigung eine Kraft zwischen dem ersten Eingriffnahmeabschnitt (24b', 24b", 24b"') und dem zweiten Eingriffnahmeabschnitt (26, 26', 26", 26"') auszubilden, aus der die Verriegelungskraft (Fᵥ) und/oder Arretierungskraft resultiert.

9. Speichervorrichtung (10, 10', 10", 10"') gemäß Anspruch 8, wobei der zweite Eingriffnahmeabschnitt (26, 26', 26", 26"') ein Führungselement ist, das eine derartige Geometrie aufweist, dass bei einer Bewegung des ersten Eingriffnahmeabschnitts (24b', 24b", 24b"') in eine Querrichtung (y), die nicht parallel zu der Arretierkraft verläuft, eine Kraft und/oder Bewegung auf die Speichervorrichtung (10, 10', 10", 10"') entlang der Arretierkraft erfolgt; und/oder
wobei die Geometrie des zweiten Eingriffnahmeabschnitts (26, 26', 26", 26"') symmetrisch ist; und/oder
wobei die Geometrie des zweiten Eingriffnahmeabschnitts (26, 26', 26", 26"') eine partiell vertikale Führungsnut (26a'") entlang einer x-Richtung (x), eine partiell horizontale Führungsnut (26b"', 26c"') entlang einer y-Richtung (y), eine L-förmige Führungsnut (26") und/oder eine T-förmige Führungsnut (26'") aufweist.

10. Speichervorrichtung (10, 10', 10", 10"') gemäß Anspruch 9, wobei die Geometrie des zweiten Eingriffnahmeabschnitts (26, 26', 26", 26"') eine abgewinkelte Arretierungsposition (26d"', 26e"') aufweist.

11. Speichervorrichtung (10, 10', 10", 10"') gemäß einem der Ansprüche 7 bis 10, wobei der Hebelmechanismus (24, 24', 24", 24"') einen relativ zu dem maritimen Objekt (12, 12', 12", 12"') wandernden Drehpunkt (24a', 24a", 24a"') aufweist, welche sich entlang der Verriegelungskraft (Fᵥ) bewegt und um welchen der erste Eingriffnahmeabschnitt (24b', 24b", 24b"') auf einer Kreisbahn bewegbar ist; und/oder wobei der Hebelmechanismus derart ausgebildet ist, dass eine Drehbewegung des Hebelmechanismus (24, 24', 24", 24"') um den Drehpunkt (24a', 24a", 24a"') mit einer Bewegung des ersten Eingriffnahmeabschnitts (24b', 24b", 24b"') entlang des Führungselements (26, 26', 26", 26"') einhergeht, wobei aus der Bewegung des ersten Eingriffnahmeabschnitts (24b', 24b", 24b"') entlang des Führungselements (26, 26', 26", 26"') eine Relativbewegung des Drehpunktes (24a', 24a", 24a"') entlang der Verriegelungskraft (Fᵥ) resultiert.

12. Speichervorrichtung (10, 10', 10", 10"') gemäß einem der Ansprüche 7 bis 11, wobei der erste Eingriffnahmeabschnitt (24b', 24b", 24b"') eine Rolle umfasst.

13. Speichervorrichtung (10, 10', 10", 10"') gemäß einem der Ansprüche 1 bis 12, wobei der Arretierungsmechanismus (24, 24', 24", 24"') zur Betätigung einen Griff (24c', 24", 24"') aufweist.

14. Speichervorrichtung (10, 10', 10", 10"') gemäß Anspruch 13 wobei der Hebelmechanismus (24, 24', 24", 24'") eine Verriegelungsposition und eine Entriegelungsposition aufweist, und
wobei der Arretierungsmechanismus (24, 24', 24", 24"') einen abnehmbaren Griff (24c') aufweist, der in der Verriegelungsposition abnehmbar ist.

15. Speichervorrichtung (10, 10', 10", 10"') gemäß Anspruch 13 oder 14, wobei der Hebelmechanismus (24, 24', 24", 24'") eine Verriegelungsposition und eine Entriegelungsposition aufweist, und
wobei die Speichervorrichtung in der Entriegelungsposition mittels des Griffes (24c', 24", 24"') transportierbar ist.

## Claims

1. Storage apparatus (10, 10', 10", 10"') for a maritime object (12, 12', 12", 12"') for storing electrical energy and/or data, comprising:
at least one storage cell (14a, 14b, 14c, 14d);
an interface (16, 16a, 16b) with the maritime object (12, 12', 12", 12'"), comprising at least two contacts (18, 18a, 18b) for electrically contacting the storage cell (14a, 14b, 14c, 14d);
a seal (22, 22a, 22b) for the interface (16, 16a, 16b), configured to, upon locking by means of a locking force (Fᵥ), be deformed such that the contacts (18, 18a, 18b) are sealed against a surrounding area and such that, after locking, a detent force is maintained; and
a detent mechanism (24, 24', 24", 24'") configured to, upon actuation, apply the locking force (Fᵥ) to the seal (22, 22a, 22b),
wherein the detent mechanism (24, 24', 24", 24'") includes a lever mechanism (24, 24', 24", 24'") comprising a first engaging portion (24b', 24b", 24b'") which may be engaged with a second engaging portion (26, 26', 26", 26'") of the maritime object (12, 12', 12", 12'").

2. Storage apparatus (10, 10', 10", 10'") according to claim 1, wherein the detent mechanism (24, 24', 24", 24'") is configured to, upon actuation, act on the seal (22, 22a, 22b) with an unlocking force (-Fᵥ).

3. Storage apparatus (10, 10', 10", 10'") according to claim 2, wherein the unlocking force (-Fᵥ) is opposed to the locking force (Fᵥ) and counteracts the detent force.

4. Storage apparatus (10, 10', 10", 10'") according to any of claims 1 to 3, wherein the detent mechanism (24, 24', 24", 24'") is configured to, after locking, establish a positive and/or frictional connection to the maritime object (12, 12', 12", 12"').

5. Storage apparatus (10, 10', 10", 10"') according to any of claims 1 to 4, wherein the storage cell (14a, 14b, 14c, 14d) includes a data storage and/or a battery, a rechargeable battery and/or a capacitor.

6. Storage apparatus (10, 10', 10", 10"') according to any of claims 1 to 5, wherein the interface (16, 16a, 16b) comprises further contacts, the at least two contacts (18, 18a, 18b) serving for supplying power and the further contacts serving for exchanging data.

7. Storage apparatus (10, 10', 10", 10"') according to any of claims 3 to 6, comprising one or several guiding elements (28) enabling guiding along the locking force (Fᵥ) and the detent force and limiting a degree of freedom in other directions.

8. Storage apparatus (10, 10', 10", 10"') according to any of claims 1 to 7, wherein the lever mechanism (24, 24', 24", 24"') is configured to, upon actuation, configure a force between the first engaging portion (24b', 24b", 24b"') and the second engaging portion (26, 26b', 26", 26"'), from which the locking force (Fᵥ) and/or the detent force result(s).

9. Storage apparatus (10, 10', 10", 10"') according to claim 8, wherein the second engaging portion (26, 26b', 26", 26'") is a guiding element comprising such a geometry that, during a movement of the first engaging portion (24b', 24b", 24b'") in a transversal direction (y) that does not run in parallel to the detent force, a force and/or a movement occurs on the storage apparatus (10, 10', 10", 10"') along the detent force; and/or
wherein the geometry of the second engaging portion (26, 26b', 26", 26"') is symmetrical; and/or
wherein the geometry of the second engaging portion (26, 26', 26", 26"') comprises a partially vertical guiding groove (26a"') along an x direction (x), a partially horizontal guiding groove (26b"', 26c"') along a y direction (y), an L-shaped guiding groove (26") and/or a T-shaped guiding groove (26"').

10. Storage apparatus (10, 10', 10", 10'") according to claim 9, wherein the geometry of the second engaging portion (26, 26', 26", 26"') comprises an angulated detent position (26d"', 26e"').

11. Storage apparatus (10, 10', 10", 10"') according to any of claims 7 to 10, wherein the lever mechanism (24, 24', 24", 24"') comprises a rotation point (24a', 24a", 24a"') which travels relative to the maritime object (12, 12', 12", 12"'), which moves along the locking force (Fᵥ) and around which the first engaging portion (24b', 24b", 24b"') is movable on a circular path; and/or
wherein the lever mechanism is configured such that a rotational movement of the lever mechanism (24, 24', 24", 24"') around the rotation point (24a', 24a", 24a'") is associated with a movement of the first engaging portion (24b', 24b", 24b"') along the guiding element (26, 26', 26", 26"'), a relative movement of the rotation point (24a', 24a", 24a"') along the locking force (Fᵥ) resulting from the movement of the first engaging portion (24b', 24b", 24b"') along the guiding element (26, 26', 26", 26"').

12. Storage apparatus (10, 10', 10", 10"') according to any of claims 7 to 11, wherein the first engaging portion (24b', 24b", 24b'") includes a roller.

13. Storage apparatus (10, 10', 10", 10'") according to one of claims 1 to 12, wherein the detent mechanism (24, 24', 24", 24'") comprises a handle (24c', 24", 24'") for actuation.

14. Storage apparatus (10, 10', 10", 10'") according to claim 13, wherein the lever mechanism (24, 24', 24", 24'") comprises a locking position and an unlocking position, and
wherein the detent mechanism (24, 24', 24", 24'") comprises a removable handle (24c') that is removable in the locking position.

15. Storage apparatus (10, 10', 10", 10'") according to claim 13 or 14, wherein the lever mechanism (24, 24', 24", 24'") comprises a locking position and an unlocking position, and
wherein the storage apparatus is transportable in the unlocking position by means of the handle (24c', 24", 24'").

## Revendications

1. Dispositif d'accumulation (10, 10', 10", 10"') pour un objet maritime (12, 12', 12", 12"') pour accumuler de l'énergie électrique et/ou des données, aux caractéristiques suivantes:
au moins une cellule d'accumulation (14a, 14b, 14c, 14d);
une interface (16, 16a, 16b) avec l'objet maritime (12, 12', 12", 12"') avec au moins deux contacts (18, 18a, 18b) pour la mise en contact électrique de la cellule d'accumulation (14a, 14b, 14c, 14d);
un joint d'étanchéité (22, 22a, 22b) pour l'interface (16, 16a, 16b) qui est conçu pour être déformé, lors du verrouillage au moyen d'une force de verrouillage (Fᵥ), de sorte que les contacts (18, 18A, 18B) soient rendus étanches par rapport à un environnement et qu'après le verrouillage soit maintenue une force d'arrêt; et
un mécanisme d'arrêt (24, 24', 24", 24"') qui est conçu pour exercer, lors de l'actionnement, la force de verrouillage (Fᵥ) sur le joint d'étanchéité (22, 22a, 22b),
dans lequel le mécanisme d'arrêt (24, 24', 24", 24"') comporte un mécanisme de levier (24, 24', 24", 24"') avec un premier segment de venue en prise (24b', 24b", 24b"') qui peut être amené en prise avec un deuxième segment de venue en prise (26, 26', 26", 26"') de l'objet maritime (12, 12', 12", 12"').

2. Dispositif d'accumulation (10, 10', 10", 10"') selon la revendication 1, dans lequel le mécanisme d'arrêt (24, 24', 24", 24"') est conçu pour agir, lors de l'actionnement, avec une force de déverrouillage (-Fᵥ) sur le joint d'étanchéité (22, 22a, 22b).

3. Dispositif d'accumulation (10, 10', 10", 10"') selon la revendication 2, dans lequel le déverrouillage (-Fv) est orienté à l'encontre de la force de verrouillage (Fv) et agit à l'encontre de la force d'arrêt.

4. Dispositif d'accumulation (10, 10', 10", 10"') selon l'une des revendications 1 à 3, dans lequel le mécanisme d'arrêt (24, 24', 24", 24"') est conçu pour établir, après le verrouillage, une connexion en liaison de forme et/ou en liaison de friction avec l'objet maritime (12, 12', 12", 12"').

5. Dispositif d'accumulation (10, 10', 10", 10"') selon l'une des revendications 1 à 4, dans lequel la cellule d'accumulation (14a, 14b, 14c, 14d) comporte une mémoire de données et/ou une batterie, un accumulateur et/ou un condensateur.

6. Dispositif d'accumulation (10, 10', 10", 10"') selon l'une des revendications 1 à 5, dans lequel l'interface (16, 16a, 16b) présente d'autres contacts, dans lequel les au moins deux contacts (18, 18a, 18b) servent à l'alimentation de courant et dans lequel les autres contacts servent à l'échange de données.

7. Dispositif d'accumulation (10, 10', 10", 10"') selon l'une des revendications 3 à 6, qui présente un ou plusieurs éléments de guidage (28) qui permettent un guidage le long de la force de verrouillage (Fv) et de la force d'arrêt et limitent un degré de liberté dans d'autres directions.

8. Dispositif d'accumulation (10, 10', 10", 10"') selon l'une des revendications 1 à 7, dans lequel le mécanisme de levier (24, 24', 24", 24"') est conçu pour former, lors de l'actionnement, une force entre le premier segment de venue en prise (24b', 24b", 24b"') et le deuxième segment de venue en prise (26, 26', 26", 26"') de laquelle résulte la force de verrouillage (Fᵥ) et/ou la force d'arrêt.

9. Dispositif d'accumulation (10, 10', 10", 10"') selon la revendication 8, dans lequel ledit deuxième segment de venue en prise (26, 26', 26", 26"') est un élément de guidage qui présente une géométrie telle que, lors d'un déplacement du premier segment de venue en prise (24b', 24b", 24b'") dans une direction transversale (y) qui n'est pas parallèle à la force d'arrêt, une force et/ou un mouvement a lieu sur le dispositif d'accumulation (10, 10', 10", 10'") de le long de la force d'arrêt; et/ou
dans lequel la géométrie du deuxième segment de venue en prise (26, 26', 26", 26"') est symétrique; et/ou
dans lequel la géométrie du deuxième segment de venue en prise (26, 26', 26", 26"') présente une rainure de guidage partiellement verticale (26a"') dans une direction x (x), une rainure de guidage partiellement horizontale (26b"', 26c"') dans une direction y (y), une rainure de guidage en forme de "L" (26") et/ou une rainure de guidage en forme de "T" (26"').

10. Dispositif d'accumulation (10, 10', 10", 10"') selon la revendication 9, dans lequel la géométrie du deuxième segment de venue en prise (26, 26', 26", 26"') présente une position d'arrêt angulaire (26d"', 26e"').

11. Dispositif d'accumulation (10, 10', 10", 10"') selon l'une des revendications 7 à 10, dans lequel le mécanisme de levier (24, 24', 24", 24"') présente un point de rotation (24a', 24a", 24a"') mobile par rapport à l'objet marin (12, 12', 12", 12"') qui se déplace le long de la force de verrouillage (Fᵥ) et autour duquel le premier segment de venue en prise (24b', 24b", 24b"') est mobile selon une trajectoire circulaire; et/ou
dans lequel le mécanisme de levier est conçu de sorte qu'un mouvement de rotation du mécanisme de levier (24, 24', 24", 24"') autour du point de rotation (24a', 24a", 24a"') soit accompagné d'un mouvement du premier segment de venue en prise (24b', 24b", 24b"') le long de l'élément de guidage (26, 26', 26", 26'") associé, du mouvement du premier segment de venue en prise (24b', 24b", 24b"') le long de l'élément de guidage (26, 26', 26", 26"') résultant un mouvement relatif du point de rotation (24a', 24a", 24a"') le long de la force de verrouillage (Fᵥ).

12. Dispositif d'accumulation (10, 10', 10", 10"') selon l'une des revendications 7 à 11, dans lequel le premier segment de venue en prise (24b', 24b", 24b"') comporte un rouleau.

13. Dispositif d'accumulation (10, 10', 10", 10"') selon l'une des revendications 1 à 12, dans lequel le mécanisme de verrouillage (24, 24', 24", 24"') présente, pour l'actionnement, une poignée (24c', 24", 24"').

14. Dispositif d'accumulation (10, 10', 10", 10"') selon la revendication 13, dans lequel le mécanisme de levier (24, 24', 24", 24"') présente une position de verrouillage et une position de déverrouillage, et
dans lequel le mécanisme d'arrêt (24, 24', 24", 24"') présente une poignée amovible (24c') qui est amovible en position de verrouillage.

15. Dispositif d'accumulation (10, 10', 10", 10"') selon la revendication 13 ou 14, dans lequel le mécanisme de levier (24, 24', 24", 24"') présente une position de verrouillage et une position de déverrouillage, et
dans lequel le dispositif d'accumulation est transportable en position de déverrouillage au moyen de la poignée (24c', 24", 24"').
